(19) **Europäisches Patentamt / European Patent Office / Office européen des brevets**

(11) **EP 1 276 976 B1**

(12) **FASCICULE DE BREVET EUROPEEN**

(45) Date de publication et mention
de la délivrance du brevet:
**11.06.2014 Bulletin 2014/24**

(21) Numéro de dépôt: **01907698.3**

(22) Date de dépôt: **25.01.2001**

(51) Int Cl.:
***F01P 7/16*** *(2006.01)*

(86) Numéro de dépôt international:
**PCT/FR2001/000239**

(87) Numéro de publication internationale:
**WO 2001/057374 (09.08.2001 Gazette 2001/32)**

(54) **PROCEDE ET DISPOSITIF DE REFROIDISSEMENT D'UN MOTEUR DE VEHICULE AUTOMOBILE**

VERFAHREN UND EINRICHTUNG ZUR KÜHLUNG EINER BRENNKRAFTMASCHINE EINES KRAFTFAHRZEUGS

METHOD AND DEVICE FOR COOLING A MOTOR VEHICLE ENGINE

(84) Etats contractants désignés:
**AT BE CH CY DE DK ES FI FR GB GR IE IT LI LU MC NL PT SE TR**

(30) Priorité: **03.02.2000 FR 0001357**

(43) Date de publication de la demande:
**22.01.2003 Bulletin 2003/04**

(73) Titulaire: **Peugeot Citroën Automobiles
92200 Neuilly Sur Seine (FR)**

(72) Inventeurs:
• **TOMASSELI, Ludovic
92400 Courbevoie (FR)**
• **LE LIEVRE, Armel
F-78360 Montesson (FR)**

(74) Mandataire: **Ménès, Catherine et al
PSA Peugeot Citroen
DRIA/PPIQ/VPI/BLE
18, rue des Fauvelles
92256 La Garenne Colombes (FR)**

(56) Documents cités:
DE-A- 4 033 261    FR-A- 2 776 707
GB-A- 2 281 613    US-A- 4 930 455
US-A- 5 215 044    US-A- 5 758 607
US-A- 5 950 576

• **PATENT ABSTRACTS OF JAPAN vol. 008, no. 240 (M-336), 6 novembre 1984 (1984-11-06) & JP 59 119010 A (NIPPON JIDOSHA BUHIN SOGO KENKYUSHO KK;OTHERS: 01), 10 juillet 1984 (1984-07-10)**

## Description

L'invention se rapporte à un procédé et à un dispositif de refroidissement d'un moteur de véhicule automobile.

L'invention concerne plus particulièrement un dispositif de refroidissement comportant un circuit hydraulique de fluide caloporteur de refroidissement, associé à une pompe de circulation de celui-ci à travers le moteur du véhicule et différentes branches du circuit. Des équipements thermiques du véhicule peuvent être disposés dans les différentes branches du circuit.

Les systèmes de refroidissement sont conçus pour garantir la tenue des moteurs aux contraintes thermomécaniques issues de la combustion. Par ailleurs, des fonctions complémentaires sont mises en oeuvre en plus du refroidissement principal du moteur, pour améliorer le rendement global ou offrir et garantir des prestations aux utilisateurs de véhicules, telles que, par exemple, le chauffage de l'habitacle.

Les systèmes de refroidissement sont dimensionnés à partir des seuls points de fonctionnement à régime maximal et à pleine charge du moteur et sont donc surdimensionnés dans la majorité des cas d'utilisation des véhicules.

Ainsi, les paramètres de fonctionnement du moteur ne sont pas optimisés, ce qui entraîne une dégradation des performances de ce dernier, tel qu'une consommation accrue, un niveau élevé d'émission de polluants ainsi qu'une réduction du confort thermique et acoustique du véhicule.

Le document DE4033261 décrit un système de refroidissement de moteur à combustion comportant un circuit de liquide caloporteur formant une boucle vers un radiateur. Le circuit comporte par ailleurs une dérivation parallèle au radiateur permettant au fluide un retour direct vers le moteur. La répartition du liquide de refroidissement entre le radiateur et la dérivation est assurée par une soupape thermostatique. Un obturateur supplémentaire permet de bloquer le retour du fluide vers le moteur pour accélérer la vitesse de montée en température de ce dernier. L'ouverture de la soupape thermostatique est commandée en fonction de la température mesurée d'une paroi du moteur. Le réchauffement du moteur est réalisé lorsque la température mesurée du liquide de refroidissement atteint une valeur cible.

Le document GB2281613A décrit encore un système de refroidissement de moteur à combustion comportant un circuit de liquide caloporteur formant une boucle vers un radiateur. Le circuit comporte par ailleurs une dérivation formant retour direct de fluide ou by-pass.

Cependant, ce système de refroidissement n'optimise pas les échanges thermiques avec le moteur.

Un but de la présente invention est de proposer un dispositif de refroidissement d'un moteur de véhicule automobile, palliant tout ou partie des inconvénients de l'art antérieur relevés ci-dessus.

Ce but est atteint par le fait que le Dispositif de refroidissement d'un moteur de véhicule automobile, du type comportant un circuit hydraulique de fluide caloporteur de refroidissement, associé à une pompe de circulation de celui-ci à travers le moteur du véhicule et différentes branches du circuit, dans lesquelles sont disposés des équipements thermiques du véhicule, au moins certaines des branches du circuit étant munies d'actionneurs pilotés électroniquement de régulation de la circulation du fluide dans celles-ci, le dispositif comportant des moyens d'acquisition d'informations relatives aux conditions de fonctionnement du véhicule, raccordés à des moyens de pilotage du fonctionnement des actionneurs, pour réguler le volume et le débit de fluide en circulation dans le circuit hydraulique afin d'optimiser le fonctionnement du moteur, caractérisé en ce que le circuit comporte une branche munie d'un actionneur proportionnel piloté électroniquement et pourvue de moyens formant retour direct de fluide ou by-pass, les moyens d'acquisition d'informations étant aptes à déterminer la température du fluide de refroidissement, de façon que; lorsque la température du fluide comprise entre une première et une seconde température seuil déterminées, le degré d'ouverture de l'actionneur est au moins temporairement proportionnel à la température du fluide de refroidissement et lorsque la température du fluide est comprise entre les première et seconde températures seuil, l'ouverture de l'actionneur de la branche de by-pass croît lorsque la température du fluide croît et, diminue lorsque la température du fluide diminue, de façon que la courbe représentative de l'ouverture de l'actionneur en fonction de la température du fluide présente une hystérésis.

Par ailleurs, l'invention peut comporter l'une ou plusieurs des caractéristiques suivantes :

- lorsque la température du fluide est inférieure à la première température seuil, les moyens de pilotage coupent ou limitent à un débit de fuite déterminé la circulation de fluide dans la branche by-pass,

- lorsque la température du fluide est supérieure à la seconde température seuil, les moyens de pilotage commandent au moins temporairement l'ouverture de l'actionneur,

- lorsque la température du fluide est inférieure à la première température seuil, les moyens de pilotage ouvrent partiellement l'actionneur de façon à assurer un débit de fuite dans la branche by-pass de l'ordre de 1/50ème à 1/5ème environ du débit maximal de la branche,

- l'augmentation de l'ouverture de l'actionneur commence après que la température du liquide excède la première température de référence d'une première valeur déterminée,

- la diminution de l'ouverture de l'actionneur commence après que la température du liquide devient inférieure, d'une première valeur déterminée, à la seconde température de référence,

- le circuit comporte une branche munie d'un actionneur et pourvue de moyens formant radiateur, et lorsque la température du fluide est supérieure à la seconde température seuil, les moyens de pilotage commandant l'actionneur de la branche by-pass en fonction de l'ouverture et la fermeture de l'actionneur de la branche radiateur, de façon d'une part à fermer l'actionneur de la branche by-pass lorsque l'actionneur de la branche radiateur est ouverte et, d'autre part, à ouvrir l'actionneur de la branche by-pass lorsque l'actionneur de la branche radiateur est fermée, les fermetures et ouvertures de l'actionneur de la branche by-pass étant réalisées simultanément ou avec un décalage de température déterminé par rapport aux ouvertures et fermetures de l'actionneur de la branche radiateur,

- l'actionneur de la branche radiateur est du type proportionnelle, et en ce que l'ouverture de l'actionneur de la branche by-pass est inversement proportionnelle à l'ouverture de l'actionneur de la branche radiateur,

- le dispositif comporte des moyens de ventilation, ou "Groupe Moto Ventilateur", aptes à coopérer avec les moyens formant radiateur, les moyens de pilotage assurant la commande des moyens de ventilation en fonction de la température du liquide de refroidissement, de façon que la vitesse de rotation des moyens de ventilation augmente lorsque la température du liquide de refroidissement croît,

- l'augmentation de la vitesse de rotation des moyens de ventilation est commandée en fonction de la vitesse de variation de la température du liquide de refroidissement,

- la vitesse de rotation des moyens de ventilation en fonction de la température du liquide de refroidissement décrit une droite dont la pente est proportionnelle à la vitesse de variation de la température du liquide de refroidissement.

D'autres particularités et avantages apparaîtront à la lecture de la description ci-après, faite en référence aux figures dans lesquelles :

- la figure 1 représente schématiquement la structure et le fonctionnement d'un premier exemple de réalisation du dispositif de refroidissement selon l'invention,

- la figure 2 représente un second mode de réalisation du dispositif de refroidissement selon l'invention,

- la figure 3 représente, sur un même graphique, un exemple de variation au court du temps t de la température T du liquide de refroidissement et d'une première température seuil $T_1$,

- la figure 4 représente un exemple de variation de la température Th de l'huile de lubrification du moteur en fonction du temps t, ainsi que le signal représentant les états d'ouverture O et de fermeture F de l'actionneur piloté électroniquement de la première branche du circuit,

- la figure 5 représente les états d'ouverture O et de fermeture F de l'actionneur de la branche de dégazage en fonction de la température T du liquide de refroidissement,

- la figure 6 représente un exemple de variation de la période P du signal de commande de l'actionneur de la branche de dégazage en fonction de la température T du liquide de refroidissement,

- la figure 7 représente l'état d'ouverture de la vanne de by-pass en fonction de la température T du liquide de refroidissement,

- la figure 8 représente schématiquement un exemple de couplage de l'ouverture de la vanne de by-pass en fonction de l'ouverture de la vanne d'un radiateur,

- la figure 9 représente deux exemples de variation de la vitesse de rotation d'un groupe moto ventilateur, en fonction de la variation de la température T du liquide de refroidissement,

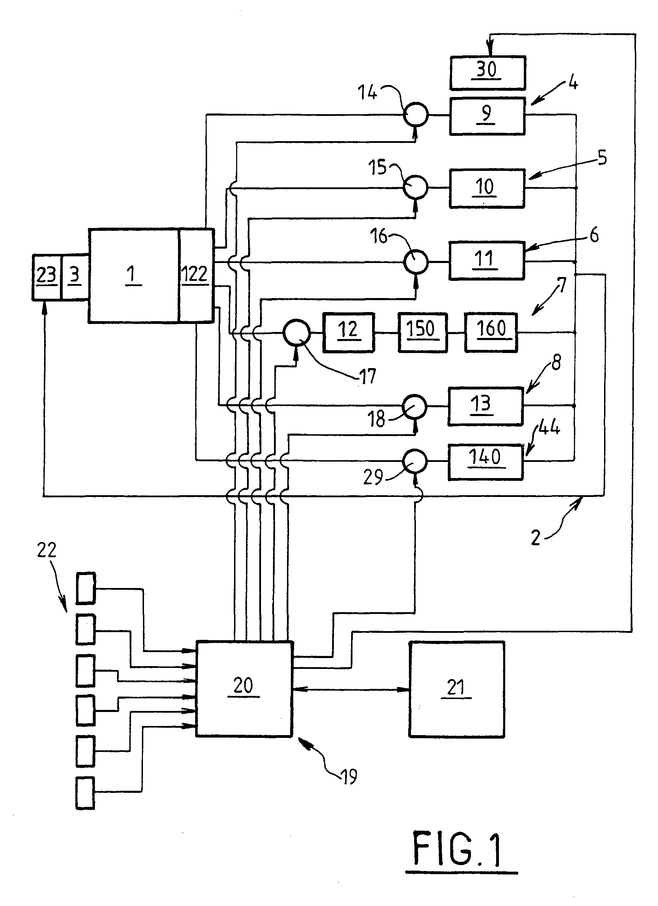

La figure 1 représente un exemple de réalisation préféré d'un dispositif de refroidissement selon l'invention. Le dispositif de refroidissement comporte un circuit hydraulique 2 contenant un fluide caloporteur de refroidissement.
Une pompe 3 hydraulique est associée au circuit 2, pour assurer la circulation du fluide à travers le moteur 1 et différentes branches 4, 5, 6, 7, 8, 44 du circuit 2. De préférence, la pompe 3 est une pompe de type mécanique, cependant, l'emploi d'une pompe électrique peut également être envisagé.
Les branches 4, 5, 6, 7, 8, 44 du circuit 2 sont alimentées en liquide de refroidissement à partir d'un boîtier 122, ou "Boîtier de Sortie d'Eau" (BSE). Le boîtier 122, qui est fixé au moteur 1, et de préférence à la culasse du moteur 1, assure la collecte du liquide de refroidissement ayant circulé dans le moteur 1. Le liquide de refroidissement ayant circulé dans les branches est récupéré quant à lui par un collecteur d'entrée d'eau 23 avant sa recirculation dans le moteur 1.
Avantageusement, au moins certaines des branches 4, 5, 6, 7, 8, 44 du circuit 2 sont munies d'actionneurs pilotés électroniquement respectifs 14, 15, 16, 17, 18, 29 de régulation de la circulation du fluide dans celles-ci. Les actionneurs pilotés électroniquement sont, par exemple, des électrovannes. Par ailleurs, le dispositif comporte des moyens 22 d'acquisition d'informations relatives aux conditions de fonctionnement du véhicule. Les moyens 22 d'acquisition sont raccordés à des moyens 19 de pilotage du fonctionnement d'au moins une partie des actionneurs 14, 15, 16, 17, 18, 29, pour réguler le volume et le débit de fluide en circulation dans le circuit hydraulique 2 afin d'optimiser le fonctionnement du moteur.

Les moyens de pilotage 19 ou unité de traitement d'information peuvent comporter tout calculateur 20 approprié, tel que, par exemple, un "Boîtier de Servitude Intelligent" (BSI) de type connu. Le calculateur 20 est associé à des moyens de stockage d'information 21 comportant, par exemple, une mémoire programmable et/ou une mémoire à lecture seule. Le calculateur 20 est également relié à des moyens 22 d'acquisition d'informations relatives aux conditions de fonctionnement du véhicule, comportant, par exemple, divers capteurs ou d'autres calculateurs tel qu'un calculateur de pilotage du moteur.

De préférence, les moyens 22 d'acquisition d'informations sont aptes à déterminer au moins l'un des paramètres suivants : le régime du moteur, le couple du moteur, la vitesse du véhicule, la température de l'huile de lubrification du moteur, la température du liquide de refroidissement du moteur, la température des gaz d'échappement du moteur, la température de l'air extérieur au véhicule et la température à l'intérieur de l'habitacle. Les différentes informations relatives aux conditions de fonctionnement du véhicule sont traitées et analysées par le calculateur 20, pour piloter le fonctionnement des actionneurs 14, 15, 16, 17, 18, 29 et éventuellement celui de la pompe 3.

Selon l'invention, le débit ou volume de liquide de refroidissement admis ou non à circuler dans les différentes branches 4, 5, 6, 7, 8, 44 du circuit 2 est fonction de l'état d'échauffement du moteur 1. Par exemple, il est possible de définir trois états du moteur 1, un premier état dans lequel le moteur est dit "froid", un second dans lequel le moteur 1 est dit "chaud", et un troisième état dit "intermédiaire" entre les états chaud et froid.

De préférence, l'état thermique du moteur 1 est caractérisé en fonction de la température T du liquide de refroidissement, de préférence à la sortie du moteur 1. Ainsi, lorsque la température du liquide de refroidissement est inférieure à une première température seuil $T_1$ déterminée, l'état du moteur 1 est dit froid. De même, lorsque la température T du liquide de refroidissement est supérieure à une seconde température seuil $T_2$ déterminée, l'état du moteur 1 est dit chaud. Enfin, lorsque la température du liquide de refroidissement est comprise entre les première $T_1$ et seconde $T_2$ températures seuil, l'état du moteur 1 est dit intermédiaire.

La première $T_1$ et/ou la seconde $T_2$ température seuil peuvent être des valeurs fixes ou variables déterminées en fonction du type du moteur 1. De préférence, la première $T_1$ et/ou la seconde $T_2$ température seuil sont des variables en fonction du type du moteur 1 et d'au moins un paramètre de fonctionnement du moteur 1. Par exemple, les première $T_1$ et/ou seconde $T_2$ températures seuil sont des fonctions de la puissance moyenne Pm fournie par le moteur 1. C'est-à-dire que les moyens de pilotage 19 coopèrent avec les moyens 22 d'acquisition, pour calculer la puissance moyenne instantanée Pm fournie par le moteur 1.

Les moyens de pilotage 19 calculent ensuite la première $T_1$ et/ou la seconde $T_2$ température seuil, en fonction de la puissance moyenne Pm instantanée et d'une modélisation déterminée du fonctionnement du moteur 1. La modélisation du moteur définit les états froid, chaud et intermédiaire (première $T_1$ et seconde $T_2$ températures seuil) en fonction de la puissance moyenne Pm fournie par ce dernier.

La puissance instantanée P(t) en kilowatt (kW) fournie par le moteur à l'instant t est donnée par la relation

suivante : $P(t) = \dfrac{2.\pi.N.C}{60 \times 1000}$ ; dans laquelle N est le régime instantané du moteur en tour/min, et C le couple instantané du moteur en N.m. Les valeurs du régime N et du couple C peuvent être mesurées par les moyens 22 d'acquisition de données, c'est-à-dire par des capteurs appropriés. Classiquement, le régime N du moteur est compris entre 0 et 6000 tr/min. environ, tandis que le couple C est compris entre 0 et 350 N.m. environ.

Les moyens de pilotage 19 calculent ensuite la puissance P(t) fournie par le moteur à l'instant t et la puissance moyenne Pm(t) fournie par le moteur à l'instant t. La puissance moyenne Pm(t) à l'instant t peut être calculée par la relation suivante :

$$Pm(t) = \dfrac{(t-1) \times Pm(t-1) + Pm(t)}{t}$$ , dans laquelle Pm(t-1) est la puissance moyenne à l'instant (t-1). Bien entendu, la puissance moyenne peut être calculée par tout autre formule équivalente, telle que :

$$Pm(t) = \dfrac{c.Pm(t-1) + kP(t)}{c + k}$$ , dans laquelle Pm(t-1) est la puissance moyenne à l'instant (t-1), P(t) la puissance instantanée à l'instant t, et c et k des coefficients pondérateurs.

Le calculateur 19 et/ou les moyens 21 de stockage d'information 21 peuvent contenir la modélisation du fonctionnement du moteur 1, définissant son état froid, chaud et intermédiaire (première $T_1$ et seconde températures seuil $T_2$) en fonction puissance moyenne Pm. C'est-à-dire que pour un type de moteur donné, on établit empiriquement et/ou par calcul des tables de correspondance donnant les températures seuil $T_1$ et $T_2$ en fonction de la puissance moyenne Pm du moteur 1. Ces tables ou modélisations, qui sont fonction du type de moteur, sont par exemple des fonctions polynomiales. La pre-

mière température seuil $T_1$ est ainsi, en général, une fonction décroissante de la puissance moyenne.

La première température seuil $T_1$ peut varier entre 20 et 60 degrés environ, et de préférence entre 30 et 50 degrés. La seconde température seuil $T_2$ peut varier quant à elle entre 60 et 100 degrés environ. Cependant, la seconde température seuil $T_2$ est en général sensiblement constante autour de la valeur de 80 degrés.

Ainsi, les moyens de pilotage 19 coopèrent avec les moyens 22 d'acquisition de données, pour comparer la température T du liquide de refroidissement avec les deux températures seuil $T_1$ et $T_2$.

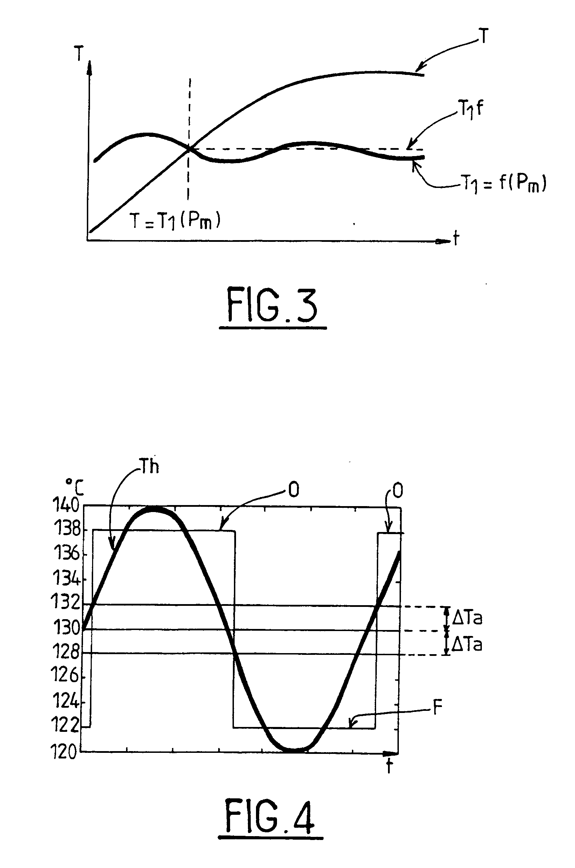

Par soucis de simplification, la valeur de la première température seuil $T_1$ peut être figée par les moyens 19 de pilotage dès que la température T mesurée du liquide de refroidissement atteint la première température seuil $T_1$. En effet, la figure 3 illustre, sur un même graphique, un exemple de variation au court du temps t : de la température T du liquide de refroidissement, et de la première température seuil $T_1(Pm)$ qui est fonction de la puissance moyenne. En déterminant ces températures T et $T_1(Pm)$, on constate que, pour une puissance moyenne donnée, à partir du moment où la température T du fluide atteint la première valeur seuil T1, cette première température seuil $T_1$ varie peu autour d'une constante $T_1f$.

En se référant à présent à la figure 1, le circuit 2 comporte une première branche 8 munie d'un premier actionneur piloté électroniquement 18 et dans laquelle est disposé un échangeur eau/huile 13. De préférence, le premier actionneur 18 est du type "tout ou rien". Les moyens 19 de pilotage coopèrent avec les moyens 22 d'acquisition, pour commander l'ouverture ou la fermeture du premier actionneur 18, de façon à d'une part accélérer la vitesse de montée en température de l'huile et, d'autre part, réguler la température de l'huile autour d'une température de référence Tr déterminée.

Plus précisément, lorsque la température T du fluide de refroidissement déterminée par les moyens 22 d'acquisition est inférieure à la première température seuil $T_1$, les moyens de pilotage 19 limitent, et de préférence arrêtent, la circulation du fluide dans la première branche 8.

Par ailleurs, lorsque la température T du liquide de refroidissement est supérieure à la seconde température seuil $T_2$, les moyens de pilotage 19 régulent la température de l'huile autour de la température de référence Tr. La température de référence Tr de l'huile correspond à la température de fonctionnement optimal de l'huile. La température de référence Tr, qui dépend du type d'huile, est comprise classiquement entre 120 et 140 degrés environ, et est égale de préférence à 130 degrés environ. Pour ce faire, les moyens 22 d'acquisition comportent des moyens de mesure de la température de l'huile de lubrification, tel qu'un capteur approprié.

La figure 4 illustre un exemple de variation de la température de l'huile Th en fonction du temps t. Sur le même graphique est représenté un signal carré symbolisant les états d'ouverture O et de fermeture F de l'actionneur 18 de la première branche 8. Les crans supérieurs du signal carré représentent les moments d'ouverture O de l'actionneur 18. Les crans inférieurs du signal carré représentent les moments de fermeture F de ce même actionneur 18.

Ainsi, lorsque la température Th de l'huile excède la température de référence Tr d'une valeur déterminée $\Delta Ta$, les moyens de pilotage 19 assurent l'ouverture de l'actionneur 18 et donc la circulation du fluide dans la première branche 8. Par ailleurs, lorsque la température Th de l'huile est inférieure d'une valeur $\Delta Ta$ à la température de référence Tr, les moyens de pilotage 19 ferment l'actionneur 18 et donc arrêtent la circulation du fluide dans la première branche 8. Les différentiels de température $\Delta Ta$ qui déclenchent les ouvertures O et fermetures F du premier actionneur 18 sont de l'ordre, par exemple, de un à six degrés environ. Comme représenté à la figure 4, les différentiels de température $\Delta Ta$ sont égaux de préférence à deux degrés.

De cette façon, compte tenu de l'inertie thermique du système, la température Th de l'huile peut être maintenue autour de la température de référence Tr avec une tolérance de cinq degrés environ. Bien entendu, la température Th de l'huile peut être maintenue dans un intervalle plus grand ou plus petit. Pour cela, il suffit de changer les différentiels ou seuils $\Delta Ta$ d'ouverture et de fermeture du premier actionneur 18 autour de la température de référence Tr.

Avantageusement, lorsque la température T du liquide de refroidissement est comprise entre les première $T_1$ et seconde $T_2$ température seuil, les moyens de pilotage 19 peuvent n'ouvrir le premier actionneur 18 que lorsque la température du liquide excède la température de l'huile d'une seconde valeur $\Delta Tb$ déterminée. Cette seconde valeur $\Delta Tb$ peut être comprise, par exemple, entre 10 et 20 degrés environ et est égale de préférence à 15 degrés. De cette façon, le liquide de refroidissement contribue à accélérer la montée en température de l'huile.

En se référant à nouveau à la figure 1, le circuit 2 comporte une seconde branche 6 dite "de dégazage", munie d'un actionneur piloté électroniquement 16 et dans laquelle est disposée une boîte de dégazage 11.

Les moyens de pilotage 19 régulent la circulation du fluide de refroidissement de façon que la quantité de fluide circulant dans la seconde branche 6 est plus importante lorsque la température T du fluide de refroidissement est supérieure à la première température seuil $T_1$, que lorsque la température T du fluide est inférieure à cette première température seuil $T_1$.

Par ailleurs, les moyens de pilotage 19 régulent la circulation de fluide dans la branche 6 de dégazage pour que la quantité de fluide circulant dans celle-ci soit plus importante lorsque la température T du fluide est supérieure à la seconde température seuil $T_2$, que lorsque la température T du fluide est inférieure à cette seconde température seuil $T_2$.

De plus, lorsque la température T du fluide est comprise entre les première $T_1$ et seconde $T_2$ températures seuil, les moyens de pilotage 19 peuvent réguler la circulation de fluide dans la branche 6 de dégazage en fonction de la température T du liquide de refroidissement. Plus précisément, les moyens de pilotage 19 peuvent commander l'augmentation de la quantité de liquide de refroidissement circulant dans la branche 6 de dégazage lorsque la température T de ce liquide augmente. L'actionneur 16 de la branche 6 de dégazage est, de préférence, du type à "tout ou rien", c'est à dire à ouverture et fermeture totales.

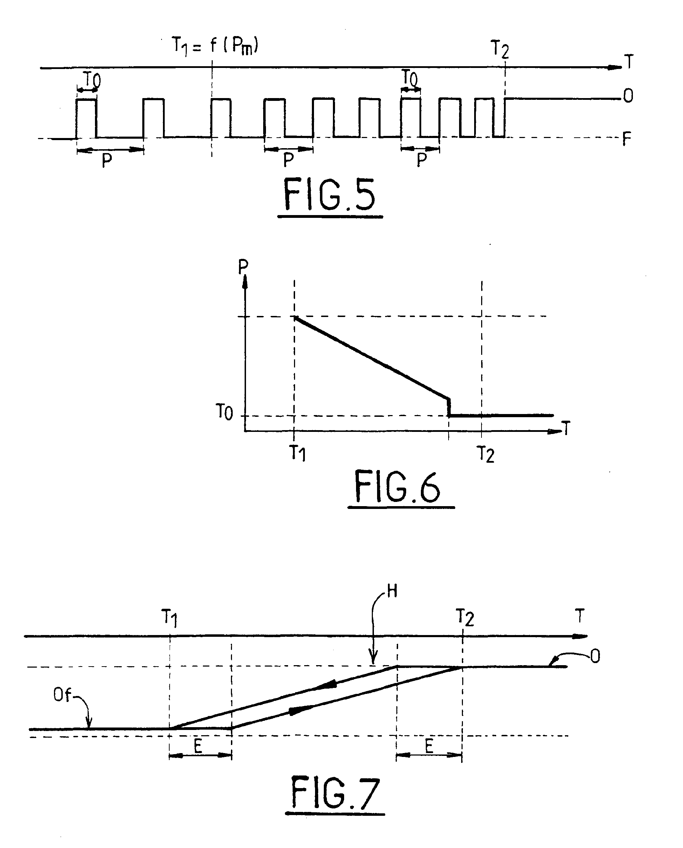

Comme représenté à la figure 5, lorsque la température T du fluide est supérieure à la seconde température seuil $T_2$, les moyens 19 de pilotage commandent l'ouverture, de préférence totale, du second actionneur 16.

Par ailleurs, lorsque la température du liquide de refroidissement T est inférieure à la première température seuil $T_1$, les moyens 19 de pilotage peuvent commander l'ouverture du second actionneur 16 en fonction de la puissance moyenne Pm fournie par le moteur 1. Plus précisément, les moyens de pilotage 19 augmentent la quantité de liquide admise à circuler dans la branche 6 de dégazage lorsque la puissance moyenne Pm fournie par le moteur 1 augmente. L'actionneur 16 de la branche 6 est commandée, par exemple, par un signal carré variable en fonction de la puissance moyenne Pm fournie par le moteur 1. La partie haute du signal représente les ouvertures O de l'actionneur 16, tandis que la partie basse représente les fermetures F de l'actionneur 16.

Lorsque le moteur est dans son état froid ($T<T_1$), le signal carré de commande de l'actionneur 16 peut être périodique. En particulier, le temps d'ouverture To de l'actionneur 16 peut être constant, tandis que la période P du signal peut varier en fonction de la puissance moyenne Pm. C'est à dire que les temps de fermeture de la vanne 16 peuvent diminuer, par exemple linéairement, lorsque la puissance moyenne Pm du moteur augmente.

Lorsque le moteur 1 est dans son état intermédiaire (température du fluide T comprise entre les première $T_1$ et seconde $T_2$ températures seuil), les moyens 19 de pilotage commandant l'ouverture de l'actionneur 16 selon un signal carré variable en fonction de la température T du liquide de refroidissement. En particulier, le temps d'ouverture To de l'actionneur 16 peut être constant, tandis que la période P du signal peut diminuer lorsque la température T du liquide de refroidissement augmente.

Comme représenté à la figure 6, entre $T_1$ et $T_2$, la période P du signal carré peut être inversement proportionnelle à la température T du liquide. De plus, lorsque la température T du liquide s'approche de la seconde température seuil $T_2$, la droite représentative de l'évolution de la période P peut présenter une discontinuité, de façon que la période P reste constante et égale au temps d'ouverture To. C'est-à-dire que, lorsque la température T du liquide atteint, par exemple, la seconde température seuil $T_2$ moins cinq degrés environ, la droite décroissante représentant la période P est suivie d'une portion constante horizontale.

Le temps d'ouverture To de l'actionneur 16 peut être de l'ordre de quelques secondes et par exemple cinq secondes. La période du signal de commande de l'actionneur 16 peut quant à elle varier, par exemple, entre 5 et 50 secondes.

Bien entendu, tout autre type de signal approprié peut être utilisé pour commander le second actionneur 16. Par exemple, comme précédemment, il est possible de faire varier le temps d'ouverture To de la vanne, en plus ou à la place du temps de fermeture.

Comme illustré à la figure 1, le circuit 2 comporte une troisième branche 5 munie d'un actionneur piloté électroniquement 15 et associée à des moyens 10 formant retour direct de fluide ou by-pass. Les moyens 19 de pilotage peuvent réguler la circulation du fluide de refroidissement dans la branche 5 de by-pass en fonction de la température T de ce fluide. En particulier, la quantité de fluide admise à circuler dans la branche 5 by-pass augmente lorsque la température du fluide croît de la première $T_1$ vers la seconde température seuil $T_2$. De préférence, l'actionneur piloté électroniquement 15 de la branche 5 by-pass est du type proportionnel.

Comme représenté à la figure 7, lorsque la température du fluide T est inférieure à la première température seuil $T_1$, les moyens de pilotage 19 peuvent limiter à un débit de fuite déterminé la circulation de fluide dans la branche 5 by-pass. C'est à dire que l'actionneur 15 de la branche 5 by-pass est partiellement ouvert Of. Par exemple, l'ouverture partielle Of de l'actionneur 15 peut assurer un débit de fuite dans la branche 5 by-pass compris entre $1/50^{\text{ème}}$ à $1/5^{\text{ème}}$ environ du débit maximal de la branche 5.

Lorsque la température du fluide est supérieure à la seconde température seuil $T_2$, les moyens de pilotage 19 commandent au moins temporairement l'ouverture totale O de l'actionneur 15 de by-pass (figure 7). Par ailleurs, lorsque la température du fluide est comprise entre les première $T_1$ et seconde températures seuil $T_2$, le degré d'ouverture de l'actionneur 15 peut être au moins temporairement proportionnel à la température T du fluide de refroidissement. Plus précisément, entre $T_1$ et $T_2$, l'ouverture de l'actionneur 15 de by-pass croît lorsque la température T du fluide croît et, diminue lorsque la température T du fluide diminue. La variation de l'ouverture de l'actionneur 15 peut être proportionnelle à la température du fluide T.

Avantageusement, la courbe représentative de l'ouverture de l'actionneur 15 en fonction de la température T du fluide peut présenter une hystérésis H. C'est-à-dire que, l'augmentation de l'ouverture de l'actionneur 15 commence après que la température du liquide T excède la première température de référence $T_1$ d'une première valeur E déterminée. De même, la diminution de l'ouverture de l'actionneur 15 commence après que la température T du liquide devient inférieure, d'une première valeur E déterminée, à la seconde température de référence $T_2$. C'est-à-dire que les ouvertures et fermetures de l'actionneur 15 sont réalisées de façon décalée par rapport respectivement aux seuils de températures $T_1$ et $T_2$. Les valeurs E de ces décalages sont par, exemple, de l'ordre de 5 degrés.

En se référant à nouveau à la figure 1, le circuit comprend une quatrième branche 4 munie d'un actionneur piloté électroniquement 14 et pourvue de moyens 9 formant radiateur. Les moyens 9 radiateur peuvent être couplés à un groupe moto ventilateur 30, qui peut lui aussi être commandé par les moyens de pilotage 19. L'actionneur 14 de la quatrième branche 4 est du type proportionnel.

Avantageusement, lorsque la température T du fluide est supérieure à la seconde température seuil $T_2$, les moyens de pilotage 19 peuvent commander l'actionneur 15 de la branche 5 by-pass en fonction de l'ouverture et la fermeture de l'actionneur 14 de la branche 4 radiateur.

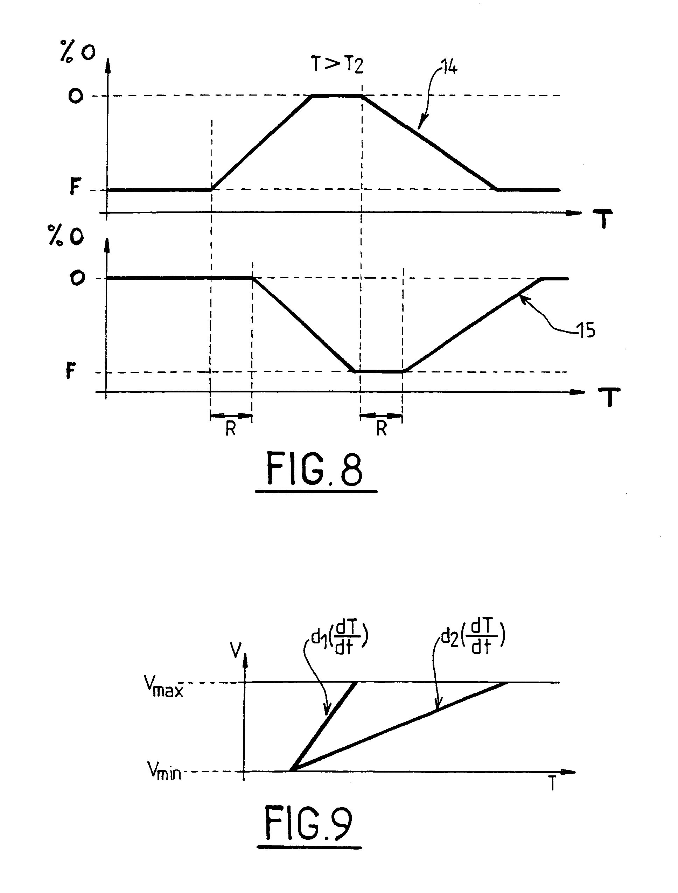

La figure 8 illustre le pourcentage d'ouverture %O des actionneurs 15, 14 des troisième et quatrième branches 5, 4 en fonction de la température T du liquide de refroidissement. Comme représenté à la figure 8, les moyens de pilotage 19 peuvent fermer F l'actionneur 15 de la branche 5 by-pass lorsque l'actionneur 14 de la branche 4 radiateur est ouvert O. De même, l'actionneur 15 de la branche 5 by-pass est ouvert O lorsque l'actionneur 14 de la branche 4 radiateur est fermé F. De préférence, l'ouverture de l'actionneur 15 de la branche 5 by-pass est inversement proportionnelle à l'ouverture de l'actionneur 14 de la branche 4 radiateur.

Par ailleurs, les fermetures et ouvertures de l'actionneur 15 de la branche 5 by-pass peuvent être réalisées avec un décalage de température R déterminé par rapport aux ouvertures et fermetures de l'actionneur 14 de la branche 4 radiateur. Le décalage de température R peut être de l'ordre de quelques degrés, par exemple cinq degrés.

Comme représenté à la figure 9, les moyens de pilotage 19 peuvent commander les moyens 30 de ventilation en fonction de la température du liquide de refroidissement. Plus précisément, la vitesse de rotation des moyens 30 de ventilation peut augmenter lorsque la température T du liquide de refroidissement croît.

De préférence, la vitesse V de rotation des moyens 30 de ventilation augmente proportionnellement à la vitesse de variation de la température du liquide de refroidissement $\dfrac{dT}{dt}$.

La figure 9 illustre deux exemples de droites d1 et d2 représentant la vitesse de rotation du groupe moto ventilateur en fonction de la température T du liquide. Les deux droites d1 et d2 ont des pentes différentes représentatives chacune d'une vitesse de variation $\dfrac{dT}{dt}$ de la température T du liquide de refroidissement. La vitesse de variation $\dfrac{dT}{dt}$ de la température T du liquide de refroidissement peut être calculée par les moyens 19 de pilotage.

Le circuit 2 de refroidissement représenté à la figure 1 comporte également une cinquième branche 7 munie d'un actionneur piloté électroniquement 17 et dans laquelle sont disposés des moyens 12 formant aérotherme d'habitacle. Classiquement, les moyens aérotherme 17 peuvent être conformés pour assurer un chauffage de l'habitacle à une première température consigne Tc déterminée par l'utilisateur du véhicule.

Les moyens de pilotage 20 coopèrent avec les moyens 22 d'acquisition, pour déterminer la température Te extérieure au véhicule. Lorsque la température extérieure Te est inférieure à la première température consigne Tc, les moyens de pilotage 20 peuvent ouvrir l'actionneur de la branche 7 aérotherme. De la même façon, lorsque la température extérieure Te est supérieure à la première température consigne Tc, les moyens de pilotage 20 peuvent fermer l'actionneur de la branche 7 aérotherme.

De la même façon, les moyens 12 aérotherme peuvent comporter une fonction climatisation de l'habitacle à une seconde température consigne Tr. Ainsi, lorsque la température extérieure Te est inférieure à la seconde température consigne Tr, les moyens de pilotage 20 peuvent ouvrir l'actionneur de la branche 7 aérotherme. De même, lorsque la température extérieure Te est supérieure à la seconde température consigne Tr, les moyens de pilotage 20 peuvent fermer l'actionneur de la branche 7 aérotherme.

Cette cinquième branche 7 peut comporter également éventuellement de moyens 160 de chauffage supplémentaires et/ou des moyens 150 de recirculation des gaz d'échappement du moteur 1 à l'admission. Classiquement, les moyens 150 formant recirculation d'au moins une partie des gaz d'échappement du moteur 1 à l'admission ou "Exaust Gaz Recycling (EGR)", permettent de contrôler la température des gaz de combustion du moteur pour, par exemple, un traitement anti-pollution.

Enfin, le circuit 2 représenté à la figure 1 comprend une sixième branche 44 dans laquelle est situé des moyens 140 formant réchauffage de l'air d'admission du moteur 1. Cette sixième branche 44 est également munie d'un actionneur piloté électroniquement 29 commandée par les moyens 19 de pilotage.

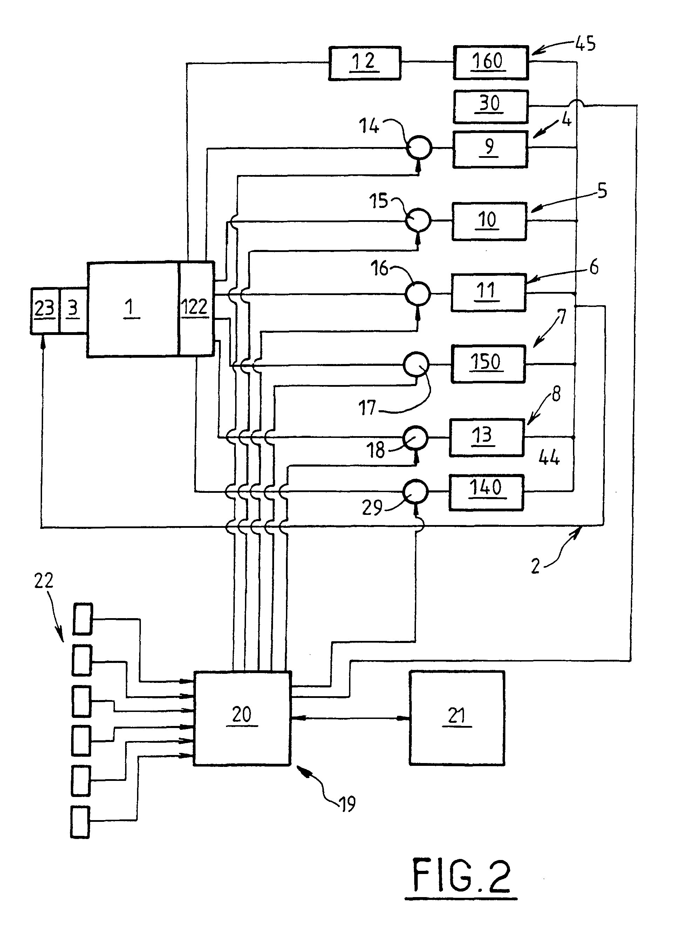

La figure 2 illustre une variante de réalisation du dispositif de refroidissement selon l'invention. Le dispositif représenté à la figure 2 diffère de celui de la figure 1 en ce que les moyens aérotherme 12 et les moyens 160 de chauffage sont disposés dans une septième branche 45 qui est distincte de la sixième branche 7 associée aux moyens 150 de recirculation des gaz d'échappement (EGR). Par ailleurs, la septième branche 45 est dépourvue d'actionneur piloté électroniquement.

Bien entendu, l'invention ne saurait se limiter aux exemples de réalisation des figures 1 et 2. En effet, le dispositif de refroidissement peut ne comporter qu'une partie des équipements thermiques 9, 10, 11, 12, 13, 140, 150, 16 et/ou des branches 4, 5, 6, 7, 8, 44, 45 décrits ci-dessus. De plus, une ou plusieurs des branches 4, 5, 6, 7, 8, 44, 45 peuvent être dépourvue d'actionneur piloté électroniquement.

Avantageusement, les moyens 22 d'acquisition d'informations peuvent être conformés pour détecter une éventuelle défaillance d'au moins un des actionneurs pilotés électroniquement. De cette façon, lorsqu'au moins une défaillance d'un actionneur est détectée et quelle que soit la température du fluide, les moyens de pilotage 19 peuvent assurer la circulation libre du fluide dans au moins certaines des branches, et de préférence dans toutes les branches. C'est-à-dire que, lorsqu'une défaillance du système est détectée, toutes les vannes du circuit 2 sont ouvertes.

On conçoit donc aisément que le dispositif de refroidissement selon l'invention, tout en étant de structure simple, permet de gérer en temps réel et de manière optimum les échanges de chaleur.

## Revendications

**1.** Dispositif de refroidissement d'un moteur de véhicule automobile, du type comportant un circuit hydraulique (2) de fluide caloporteur de refroidissement, associé à une pompe (3) de circulation de celui-ci à travers le moteur (1) du véhicule et différentes branches (4, 5, 6, 7, 8, 44, 45) du circuit, dans lesquelles sont disposés des équipements thermiques (9, 10, 11, 12, 13, 140, 150, 160) du véhicule, au moins certaines des branches (4, 5, 6, 7, 8, 44) du circuit (2) étant munies d'actionneurs pilotés électroniquement (14, 15, 16, 17, 18, 29) de régulation de la circulation du fluide dans celles-ci, le dispositif comportant des moyens (22) d'acquisition d'informations relatives aux conditions de fonctionnement du véhicule, raccordés à des moyens (19) de pilotage du fonctionnement des actionneurs (14, 15, 16, 17, 18, 29), pour réguler le volume et le débit de fluide en circulation dans le circuit hydraulique (2) afin d'optimiser le fonctionnement du moteur (1), **caractérisé en ce que** le circuit (2) comporte une branche (5) munie d'un actionneur proportionnel piloté électroniquement (15) et pourvue de moyens (10) formant retour direct de fluide ou by-pass, les moyens (22) d'acquisition d'informations étant aptes à déterminer la température (T) du fluide de refroidissement, de façon que, lorsque la température (T) du fluide comprise entre une première ($T_1$) et une seconde température seuil ($T_2$) déterminées, le degré d'ouverture de l'actionneur (15) est au moins temporairement proportionnel à la température (T) du fluide de refroidissement, et lorsque la température (T) du fluide est comprise entre les première ($T_1$) et seconde (T2) températures seuil, l'ouverture de l'actionneur (15) de la branche (5) de by-pass croît lorsque la température (T) du fluide croît et, diminue lorsque la température (T) du fluide diminue, de façon que la courbe représentative de l'ouverture de l'actionneur (15) en fonction de la température du fluide présente une hystérésis (H).

**2.** Dispositif selon la revendication 1, **caractérisé en ce que**, lorsque la température (T) du fluide est inférieure à la première température seuil ($T_1$), les moyens de pilotage (19) coupent ou limitent à un débit de fuite déterminé la circulation de fluide dans la branche (5) by-pass.

**3.** Dispositif selon la revendication 1 ou la revendication 2, **caractérisé en ce que**, lorsque la température (T) du fluide est supérieure à la seconde température seuil ($T_2$), les moyens de pilotage (19) commandent au moins temporairement l'ouverture de l'actionneur (15).

**4.** Dispositif selon l'une quelconque des revendications 1 à 3, **caractérisé en ce que** lorsque la température (T) du fluide est inférieure à la première température seuil ($T_1$), les moyens de pilotage (19) ouvrent partiellement l'actionneur (15) de façon à assurer un débit de fuite dans la branche (5) by-pass de l'ordre de $1/50^{ème}$ à $1/5^{ème}$ environ du débit maximal de la branche (5).

**5.** Dispositif selon la revendication 1, **caractérisé en ce que** l'augmentation de l'ouverture de l'actionneur (15) commence après que la température (T) du liquide excède la première température de référence ($T_1$) d'une première valeur (E) déterminée.

**6.** Dispositif selon la revendication 1 ou la revendication 5, **caractérisé en ce que** la diminution de l'ouverture de l'actionneur (15) commence après que la température (T) du liquide devient inférieure, d'une première valeur (E) déterminée, la seconde température de référence ($T_2$).

**7.** Dispositif selon la revendication 3, **caractérisé en ce que** le circuit (2) comporte une branche (4) munie d'un actionneur (14) et pourvue de moyens (9) formant radiateur, et **en ce que**, lorsque la température du fluide est supérieure à la seconde température seuil ($T_2$), les moyens de pilotage (19) commandant l'actionneur (15) de la branche (5) by-pass en fonction de l'ouverture et la fermeture de l'actionneur (14) de la branche (4) radiateur, de façon d'une part à fermer l'actionneur (15) de la branche (5) by-pass lorsque l'actionneur (14) de la branche (4) radiateur est ouverte et, d'autre part, à ouvrir l'actionneur (15) de la branche (5) by-pass lorsque l'actionneur (14) de la branche (4) radiateur est fermée, les fermetures et ouvertures de l'actionneur (15) de la branche (5) by-pass étant réalisées simultanément ou avec un décalage (R) de température déterminé par rapport aux ouvertures et fermetures de l'actionneur (14) de la branche (4) radiateur.

8. Dispositif selon la revendication 7, **caractérisé en ce que** l'actionneur (14) de la branche (4) radiateur est du type proportionnelle, et **en ce que** l'ouverture de l'actionneur (15) de la branche by-pass est inversement proportionnelle à l'ouverture de l'actionneur (14) de la branche (4) radiateur.

9. Dispositif selon la revendication 7, **caractérisé en ce que** le dispositif comporte des moyens (30) de ventilation, ou "Groupe Moto Ventilateur", aptes à coopérer avec les moyens (9) formant radiateur, les moyens de pilotage (19) assurant la commande des moyens (30) de ventilation en fonction de la température du liquide de refroidissement, de façon que la vitesse de rotation des moyens (30) de ventilation augmente lorsque la température (T) du liquide de refroidissement croît.

10. Dispositif selon la revendication 9, **caractérisé en ce que** l'augmentation de la vitesse (V) de rotation des moyens (30) de ventilation est commandée en fonction de la vitesse $\left(\dfrac{dT}{dt}\right)$ de variation de la température (T) du liquide de refroidissement.

11. Dispositif selon la revendication 10, **caractérisé en ce que** la vitesse de rotation des moyens (30) de ventilation en fonction de la température (T) du liquide de refroidissement décrit une droite dont la pente est proportionnelle à la vitesse $\left(\dfrac{dT}{dt}\right)$ de variation de la température du liquide de refroidissement.

**Patentansprüche**

1. Kühlvorrichtung einer Kraftmaschine eines Kraftfahrzeugs des Typs, die einen Hydraulikkreislauf (2) mit Kühlmittel aufweist, der mit einer Pumpe (3) zum Umwälzen dieses durch die Brennkraftmaschine (1) des Fahrzeugs und mit verschiedenen Zweigen (4, 5, 6, 7, 8, 44, 45) des Kreislaufs verbunden ist, in welchen Wärmeausrüstungen (9, 10, 11, 12, 13, 140, 150, 160) des Fahrzeugs angeordnet sind, wobei mindestens bestimmte Zweige (4, 5, 6, 7, 8, 44) des Kreislaufs (2) mit elektronisch gesteuerten Stellantrieben (14, 15, 16, 17, 18, 29) zum Regeln der Zirkulation der Flüssigkeit in diesen versehen sind, wobei die Vorrichtung Mittel (22) zum Erfassen von Informationen in Zusammenhang mit den Betriebszuständen des Fahrzeugs aufweist, die an Steuermittel (19) der Funktion der Stellantriebe (14, 15, 16, 17, 18, 29) angeschlossen sind, um das Flüssigkeitsvolumen und den Flüssigkeitsdurchsatz in Zirkulation in dem Hydraulikkreislauf (2) zu regeln, um die Funktion der Brennkraftmaschine (1) zu optimieren, **dadurch gekennzeichnet, dass** der Kreislauf (2) einen Zweig (5) aufweist, der mit einem proportionalen Stellantrieb (15) versehen ist, der elektronisch gesteuert und mit Mitteln (10) versehen ist, die einen direkten Flüssigkeitsrücklauf oder Bypass bilden, wobei die Mittel (22) zum Erfassen von Informationen geeignet sind, die Temperatur (T) des Kühlmittels zu erfassen, so dass, wenn die Temperatur (T) des Kühlmittels zwischen einem ersten ($T_1$) und einem zweiten Temperaturschwellenwert ($T_2$) liegt, der Öffnungsgrad des Stellantriebs (15) wenigstens vorübergehend zu der Temperatur (T) des Kühlmittels proportional ist, und, wenn die Temperatur (T) des Kühlmittels zwischen dem ersten ($T_1$) und dem zweiten ($T_2$) Temperaturschwellenwert liegt, die Öffnung des Stellantriebs (15) des Zweigs (5) des Bypass zunimmt, während die Temperatur (T) des Kühlmittels zunimmt, und abnimmt, wenn die Temperatur (T) des Kühlmittels abnimmt, so dass die repräsentative Kurve der Öffnung des Stellantriebs (15) in Abhängigkeit von der Temperatur des Kühlmittels eine Hysterese (H) aufweist.

2. Vorrichtung nach Anspruch 1, **dadurch gekennzeichnet, dass**, wenn die Temperatur (T) des Kühlmittels niedriger ist als der erste Temperaturschwellenwert ($T_1$), die Steuermittel (19) einen festgelegten Leckdurchfluss der Kühlmittelzirkulation in dem Bypasszweig (5) abschalten oder begrenzen.

3. Vorrichtung nach Anspruch 1 oder Anspruch 2, **dadurch gekennzeichnet, dass**, wenn die Temperatur (T) des Kühlmittels höher ist als der zweite Temperaturschwellenwert ($T_2$), die Steuermittel (19) wenigstens vorübergehend das Öffnen des Stellantriebs (15) steuern.

4. Vorrichtung nach einem der Ansprüche 1 bis 3, **dadurch gekennzeichnet, dass**, wenn die Temperatur (T) des Kühlmittels niedriger ist als der erste Temperaturschwellenwert ($T_1$), die Steuermittel (19) den Stellantrieb derart teilweise öffnen, dass ein Leckdurchsatz in dem Bypasszweig (5) in der Größenordnung von etwa 1 50tel bis 1 5tel des maximalen Durchflusses des Zweigs (5) sichergestellt ist.

5. Vorrichtung nach Anspruch 1, **dadurch gekennzeichnet, dass** die Erhöhung der Öffnung des Stellantriebs (15) beginnt, nachdem die Temperatur (T) des Kühlmittels den ersten Temperaturschwellenwert ($T_1$) um einen festgelegten ersten Wert (E) überschreitet.

6. Vorrichtung nach Anspruch 1 oder Anspruch 5, **dadurch gekennzeichnet, dass** die Verringerung der Öffnung des Stellantriebs (15) beginnt, nachdem die Temperatur (T) des Kühlmittels um einen festgelegten ersten Wert (E) kleiner wird als der zweite Temperaturbezugswert ($T_2$).

7. Vorrichtung nach Anspruch 3, **dadurch gekennzeichnet, dass** der Kreislauf (2) einen Zweig (4) aufweist, der mit einem Stellantrieb (14) und mit Mitteln (9), die einen Kühler bilden, versehen ist, und dass, wenn die Temperatur des Kühlmittels größer ist als der zweite Temperaturschwellenwert ($T_2$), die Steuermittel (19) den Stellantrieb (15) des Bypasszweigs (5) in Abhängigkeit von der Öffnung und dem Schließen des Stellantriebs (14) des Kühlerzweigs (4) derart steuern, dass einerseits der Stellantrieb (15) des Bypasszweigs (5) geschlossen wird, wenn der Stellantrieb (14) des Kühlerzweigs (4) offen ist und, andererseits, der Stellantrieb (15) des Bypasszweigs (5) geöffnet wird, wenn der Stellantrieb (14) des Kühlerzweigs (14) geschlossen ist, wobei die Schließungen und Öffnungen des Stellantriebs (15) des Bypasszweigs (5) gleichzeitig oder mit einer Verschiebung (R) der festgelegten Temperatur im Vergleich zu dem Öffnen und Schließen des Stellantriebs (14) des Kühlerzweigs (4) ausgeführt werden.

8. Vorrichtung nach Anspruch 7, **dadurch gekennzeichnet, dass** der Stellantrieb (14) des Kühlerzweigs (4) des proportionalen Typs ist, und dass die Öffnung des Stellantriebs (15) des Bypasszweigs zu der Öffnung des Stellantriebs (14) des Kühlerzweigs (4) umgekehrt proportional ist.

9. Vorrichtung nach Anspruch 7, **dadurch gekennzeichnet, dass** die Vorrichtung Belüftungsmittel (30) oder ein "Belüftungsaggregat" aufweist, die geeignet sind, mit den Mitteln (9), die den Kühler bilden, zusammenzuwirken, wobei die Steuermittel (19) die Steuerung der Belüftungsmittel (30) in Abhängigkeit von der Temperatur des Kühlmittels derart steuern, dass die Drehzahl der Belüftungsmittel (30) erhöht wird, wenn die Temperatur (T) des Kühlmittels zunimmt.

10. Vorrichtung nach Anspruch 9, **dadurch gekennzeichnet, dass** die Erhöhung der Drehzahl (V) der Belüftungsmittel (30) in Abhängigkeit von der Variationsgeschwindigkeit ( $\dfrac{dT}{dt}$ ) der Temperatur (T) des Kühlmittels gesteuert wird.

11. Vorrichtung nach Anspruch 10, **dadurch gekennzeichnet, dass** die Drehzahl der Belüftungsmittel (30) von der Temperatur (T) des Kühlmittels eine Gerade beschreibt, deren Gefälle zu der Variationsgeschwindigkeit ( $\dfrac{dT}{dt}$ ) der Temperatur (T) des Kühlmittels proportional ist.

**Claims**

1. A device for cooling a motor vehicle engine, of the type comprising a hydraulic circuit (2) of coolant fluid, associated with a pump (3) for the circulation thereof through the engine (1) of the vehicle and different branches (4, 5, 6, 7, 8, 44, 45) of the circuit, in which are disposed thermal equipment (9, 10, 11, 12, 13, 140, 150, 160) of the vehicle, at least some of the branches (4, 5, 6, 7, 8, 44) of the circuit (2) being provided with electronically driven actuators (14, 15, 16, 17, 18, 29) to regulate the circulation of the fluid therein, the device comprising means (22) for the acquisition of information relating to the operation conditions of the vehicle, connected to means (19) for driving the operation of the actuators (14, 15, 16, 17, 18, 29) to regulate the volume and the flow rate of fluid in circulation in the hydraulic circuit (2) so as to optimize the operation of the engine (1), **characterized in that** the circuit (2) comprises a branch (5) provided with an electronically driven proportional actuator (15) and provided with means (10) forming direct return of fluid or by-pass, the information acquisition means (22) being able to determine the temperature (T) of the cooling fluid, such that when the temperature (T) of the fluid is comprised between a specified first ($T_1$) and a second ($T_2$) threshold temperature, the degree of opening of the actuator (15) is at least temporarily proportional to the temperature (T) of the cooling fluid, and when the temperature (T) of the fluid is comprised between the first ($T_1$) and second ($T_2$) threshold temperatures, the opening of the actuator (15) of the by-pass branch (5) increases when the temperature (T) of the fluid increases, and decreases when the temperature (T) of the fluid decreases, such that the representative curve of the opening of the actuator (15) as a function of the temperature of the fluid presents a hysteresis (H).

2. The device according to Claim 1, **characterized in that** when the temperature (T) of the fluid is lower than the first threshold temperature ($T_1$), the driving means (19) cut off or limit to a specified leakage flow rate the circulation of fluid in the by-pass branch (5).

3. The device according to Claim 1 or Claim 2, **characterized in that** when the temperature (T) of the fluid is higher than the second threshold temperature ($T_2$), the driving means (19) command at least temporarily the opening of the actuator (15).

4. The device according to any one of Claims 1 to 3, **characterized in that** when the temperature (T) of the fluid is lower than the first threshold temperature ($T_1$), the driving means (19) partially open the actuator (15) so as to ensure a leakage flow rate in the by-pass branch (5) in the order of 1/50th to 1/5th approximately of the maximum flow rate of the branch (5).

5. The device according to Claim 1, **characterized in that** the increase of the opening of the actuator (15) begins after the temperature (T) of the liquid exceeds the first reference temperature ($T_1$) by a specified first value (E).

6. The device according to Claim 1 or Claim 5, **characterized in that** the decrease of the opening of the actuator (15) beings after the temperature (T) of the liquid becomes lower than the second reference temperature ($T_2$) by a specified first value (E).

7. The device according to Claim 3, **characterized in that** the circuit (2) comprises a branch (4) equipped with an actuator (14) and provided with radiator forming means (9), and **in that** when the temperature of the fluid is higher than the second threshold temperature ($T_2$), the driving means (19) commanding the actuator (15) of the by-pass branch (5) as a function of the opening and closing of the actuator (14) of the radiator branch (4), so as, on the one hand, to close the actuator (15) of the by-pass branch (5) when the actuator (14) of the radiator branch (4) is open and, on the other hand, to open the actuator (15) of the by-pass branch (5) when the actuator (14) of the radiator branch (4) is closed, the closings and openings of the actuator (15) of the by-pass branch (5) being realized simultaneously or with a specified temperature offset (R) relative to the openings and closings of the actuator (14) of the radiator branch (4).

8. The device according to Claim 7, **characterized in that** the actuator (14) of the radiator branch (4) is of the proportional type, and **in that** the opening of the actuator (15) of the by-pass branch is inversely proportional to the opening of the actuator (14) of the radiator branch (4).

9. The device according to Claim 7, **characterized in that** the device comprises ventilation means (30), or "motor ventilation unit", able to cooperate with the radiator forming means (9), the driving means (19) ensuring the command of the ventilation means (30) as a function of the temperature of the cooling liquid, such that the rotation speed of the ventilation means (30) increases when the temperature (T) of the cooling liquid increases.

10. The device according to Claim 9, **characterized in that** the increase of the rotation speed (V) of the ventilation means is commanded as a function of the

speed ( $\dfrac{dT}{dt}$ ) of variation of the temperature (T) of the cooling liquid.

11. The device according to Claim 10, **characterized in that** the rotation speed of the ventilation means (30) as a function of the temperature (T) of the cooling liquid describes a straight line, the slope of which is proportional to the speed ( $\dfrac{dT}{dt}$ ) of variation of the temperature of the cooling liquid.

## FIG.1

## FIG.2

## FIG.3

## FIG.4

$T_1 = f(P_m)$

FIG.5

FIG.6

FIG.7

FIG.8

FIG.9

**EP 1 276 976 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- DE 4033261
- GB 2281613 A